# EUROPÄISCHE PATENTSCHRIFT

(11) **EP 1 030 585 B1**
(45) Veröffentlichungstag und Bekanntmachung des Hinweises auf die Patenterteilung: **13.08.2003**
(21) Anmeldenummer: 98966822.3
(22) Anmeldetag: 16.11.1998
(51) Int. Cl.: A47J 37/06

(54) **ELEKTRISCH BEHEIZTES HAUSHALTSKLEINGERÄT, INSBESONDERE TOASTER MIT GRILLROST UND ROLLWENDEEINRICHTUNG**
ELECTRICALLY HEATED SMALL HOUSEHOLD APPLIANCE, ESPECIALLY A TOASTER WITH A GRILL AND A REVOLVING TURNING DEVICE
PETIT APPAREIL MENAGER CHAUFFE ELECTRIQUEMENT, NOTAMMENT GRILLE-PAIN MUNI D'UNE GRILLE ET D'UN SYSTEME INVERSEUR ROTATIF

(30) Priorität: 19.11.1997 DE 19751325
(43) Veröffentlichungstag der Anmeldung: 30.08.2000
(73) Patentinhaber: E.I.S. GmbH, 90571 Schwaig (DE); Hofer, Norbert, 90552 Röthenbach a.d. Pegnitz (DE)
(72) Erfinder: HOFER, Norbert, D-90552 Röthenbach a.d. Pegnitz (DE); DREYKORN-LINDNER, Werner, D-90571 Schwaig (DE)
(74) Vertreter: Dreykorn-Lindner, Werner, Dipl.-Ing.
(86) Internationale Anmeldenummer: EP9807412
(87) Internationale Veröffentlichungsnummer: WO99025233

(56) Entgegenhaltungen:
- DE-A- 3 443 544
- DE-B- 2 728 081
- DE-U- 6 904 033
- DE-U- 9 216 648
- DE-U- 9 420 198
- US-A- 2 253 434
- US-A- 3 331 308
- US-A- 3 866 525
- US-A- 5 058 493

## Beschreibung

Die Erfindung betrifft ein elektrisch beheiztes Haushaltskleingerät, insbesondere Toaster, mit einem Gehäuse, mit mindestens einer nach oben hin offenen Heizkammer, mit einem Zusatz in Form eines länglichen, an einem Stab befestigten Drahtkäfig und mit einem Drehantrieb für den den Drahtkäfig mittig durchsetzenden Stab, welcher beim Toasten auf dem Toaster im Abstand oberhalb des Brotaufnahmeschlitzes des Toasters gelagert ist und wobei der Drahtkäfig zum Einbringen von Gebäck geöffnet bzw. geschlossen werden kann (Oberbegriff des Patentanspruchs 1).

Weiterhin betrifft die Erfindung einen Toaster mit Grillrost und einem Gehäuse mit mindestens einem kopfseitigen Einsteckschlitz für Brotscheiben, wobei der Grillrost nur einseitig an einem Stellfinger gelagert und aus einer Ruhelage in eine Arbeitslage mittels einer mit dem Stellfinger verbundenen Handhabe höhenverstellbar ist (Oberbegriff des Patentanspruchs 10).

Elektrisch beheizte Haushaltskleingeräte wie beispielsweise elektrische Brotröster oder elektrische Eierkocher oder Kaffeemaschinen sind seit langem bekannt. Beispielsweise ist aus dem DE 92 13 427 U1 ein elektrischer Brotröster mit einem Gehäuse mit oberseitigem Einsteckschlitz für Brotscheiben und einem an der Gehäuseoberseite befestigten oder in diese integrierten, bedarfsweise auf Abstand ausschwenkbaren Auflagerost zum Aufwärmen von Brötchen bekannt. Der Auflagerost, besteht aus zwei Auflagestäben, deren Enden abgekröpft sind, wobei die parallel zu den Auflagestäben versetzten Enden der Verkröpfungen im Gehäuse drehbar gelagert sind, so dass die Auflagestäbe aus einer Ruheposition, in der sie parallel zur Oberseite des Gehäuses angeordnet sind, in eine Arbeitslage verschwenkbar sind, in der sie über die Oberseitenfluchtebene vorragen. Im einzelnen ist vorgesehen, dass das eine Ende beider Auflagestäbe über das Lager des verkröpften Bereichs verlängert ist, wobei der verlängerte Bereich nochmals abgekröpft ist. Der sich parallel zu den Auflagestäben erstreckende Endbereich der zweiten Verkröpfung ist von einer gehäuseseitig gelagerten, um eine quer zur Auflagestablängsachse schwenkbare Betätigungshandhabe - deren Achse parallel zur Oberseite des Gehäuses gerichtet ist - übergriffen, wodurch die Auflagestäbe aus der Ruhelage in die Arbeitslage verschwenkbar sind.

Weiterhin ist eine Sonderausführung eines Toasters mit variabler Heizkammer aus dem DE 89 11 394 U1 bekannt. Der Toaster hat an einer seiner Längsseiten einen Gehäuseausbruch, vorzugsweise rechteckigen Querschnittes eingearbeitet und trägt ein Bodenelement, welches der Lagerung eines Teils der variablen Heizkammer (Aufheizfach) mittels der daran angebrachten Drehlagerung dient. Die Drehlagerung ist vorzugsweise an dem einen Ende des Aufheizfaches angebracht, welches der Außenseite des Gehäuses zugewandt ist. Die dadurch verschwenkbare Heizkammer bzw. das Aufheizfach selbst stellt eine nach oben hin geöffnete Box dar, welche in der Länge, Breite und Höhe in etwa den Maßen der einer Toastbrotscheibe entspricht.

Um auch unebenes Gebäck, z.B. Brötchen oder halbrundförmige Brotstücke wie Muffins zu toasten, sind aus dem DE 94 20 198 U1 oder dem DE 295 01 793 U1 ein Zusatz fiir einen Toaster mit einem Hauptkörper bekannt, der Einrichtungen zum Befestigen des Zusatzes am Toaster und der einen im allgemeinen länglichen Drahtkäfig für die Aufnahme von Gebäck enthält. Im einzelnen weist der Hauptkörper einen Drehantrieb mit einem Elektromotor und an einem Ende eine Einrichtung zum Eingriff mit dem Drehantrieb auf, wodurch der Drahtkäfig drehbar ist. Der Drahtkäfig ist aus Seitenteilen zusammengesetzt, von denen eines geöffnet bzw. geschlossen werden kann. Schließlich sind Mittel zum Halten des vom Drehantrieb beabstandeten Endes des Drahtkäfigs vorgesehen, wobei diese derart gestaltet sind, dass der Drahtkäfig im wesentlichen parallel über dem Brotaufnahmeschlitz liegt, wenn der Zusatz auf dem Toaster montiert ist.

Um ein Kochgerät auf der Basis eines elektrischen Toasters, der mindestens einen nach oben offenen Aufnahmeschlitz für Toastscheiben und einen Zeitschalter zum Steuern der Heizzeit aufweist, zu realisieren, ist aus dem DE 92 08 649 U1 ein auf der Oberseite des Toasters aufgesetztes oder lösbar befestigbares, zu dieser Oberseite passend ausgebildetes Zusatzgerät zum Zubereiten von Speisen unter Nutzung der im Toaster entwickelten Wärme bekannt. Im einzelnen weist das Zusatzgerät einen auf dem Toaster abnehmbar angebrachten, nach oben hin offenen Wasserbehälter, einen auf den Wasserbehälter im wesentlichen dampfdicht aufsetzbaren und mit einem Dampf-Überdruckauslaß versehenen Deckel und einen in dem von Wasserbehälter und Deckel umschlossenen und zur Aufnahme mindestens eines Hühnereies eingerichteten Eierhalter auf.

Ein weiteres elektrisch beheiztes Küchengerät zur Zubereitung von Back- bzw. Folienkartoffeln ist aus dem DE 296 13 352 U1 bekannt. Im einzelnen ist das Küchengerät aufklappbar, wobei in die beheizbare Bodenplatte und in die durch ein Scharnier mit ihr verbundene gleichfalls beheizbare Deckplatte jeweils zwei bis vier muldenartige, halbkugelförmige Vertiefungen eingearbeitet sind, so dass die Platten im zugeklappten Zustand ein bis vier Früchte umschliessen können und gleichwohl bündig gegeneinander abschliessen.

Neben den Toastern sind als weitere Haushaltskleingeräte Kaffeemaschinen mit einem Kaffeefilter, mit einem Filterunterteil mit Öffnungen im Boden und mit einem das Filterunterteil abdeckenden Aromadeckel mit eingeformtem Zulauftrichter bekannt. In der DE 38 01 298 C1 ist eine Kaffeemaschine mit einem besonders ausgestalteten Einlegetrichter beschrieben, wobei der Einlegetrichter im Filterunterteil zur Aufnahme von Eiern oder Fertiggerichten einsetzbar ist. Das Brühwasser wird durch ebene und geneigte Abschnitte der Bodenfläche des Einlegetrichters drucklos so verteilt, dass es die gesamte Oberfläche des Kaffeemehls oder flüssigem Kaffee-Extrakt vollständig berieselt, ohne dass es mit der Oberfläche der Eier in Berührung kommt. Hierzu hat die Bodenfläche des Einlegetrichters eine Auffangschale mit angrenzender Ringkammer, die bei Schräglage der Kaffeemaschine eine vollflächige Berieselung durch nachfolgende ebene und geneigte Abschnitte der Bodenfläche des Einlegetrichters auf die Kaffeemehloberfläche sicherstellt, wobei der Brühwasserzulauf nach oben durch den Innentrichter und nach unten durch den Aussentrichter des Einlegetrichters abgeschirmt wird. Das Kaffeemehl liegt in einem zylindrischen Tassenfilter mit Bördelrand, wobei sich der geneigte Aussenrand vom Einlegetrichter auf den Bördelrand des Tassenfilters legt und somit den kompletten Innenraum nach aussen abschliesst. Der Filter-Kaffee läuft durch eine Auslauföffnung in die Kaffeekanne während der freiwerdende Heißdampf den Einlegetrichter erhitzt, wodurch die Eier mit der gewünschten Härte gekocht werden können.

Elektrische Eierkocher weisen üblicherweise eine beheizte Wasserschale und einen Garraum mit Deckel auf. Beispielsweise ist aus der DE 29 24 909 C2 ein elektrischer Eierkocher mit einem Zeitglied bekannt, das nach Ablauf einer einstellbaren Garzeit ein Signal betätigt und/oder den Deckel öffnet. Im einzelnen dient als Zeitglied eine Programmuhr, an der mehrere Zeitpunkte einstellbar sind, bei deren Erreichen jeweils das Signal betätigt und/oder der Deckel geöffnet wird, um das Ende der Garzeit einer Teilgruppe der in den Garraum eingesetzten Eier anzuzeigen

Schließlich ist aus der US-PS 5,058,494 ein Grillwagen bekannt, auf dessen Grillrost ein Zubehörteil aufgesetzt werden kann. Eine Ausführungsform zeigt an sich eine Rollwendeeinrichtung auf. Diese Rollwendeeinrichtung ist jedoch nur für im wesentlichen zylindrisches Grillgut, wie beispielsweise Würstchen geeignet. Für anderes Grillgut, wie beispielsweise Fleischstücke bzw. Geflügel, Braten oder dergleichen, ist anstelle der Rollwendeeinrichtung ein drehbarer Fleischspieß oder für Maiskolben anstelle des länglichen Drehspießes ein drehbarer Spieß mit u-förmigen Zinken erforderlich. Dadurch, dass sowohl die antreibbaren zylindrischen Röhren als auch die mit entsprechendem Kopfstück versehenen Drehspieße herausnehmbar sind, kann entsprechend dem zu grillenden Gut ein Umrüsten erfolgen.

Hinsichlich Warmhaltefunktion ist aus dem DE 295 11 412 U1 ein Aufsatz für Brotröster mit zwei an den Schmalseiten vorgesehenen Tragarmen, welche mittels einer Handhabe vertikal aus einer Ruhestellung in eine Arbeitsstellung verschoben werden können, und mit mindestens zwei parallel zueinander daran befestigten Auflagestäben bekannt. Im einzelnen ist vorgesehen, dass einer der beiden Auflagestäbe bügelartig ausgebildet sowie schwenkbar in den Tragarmen gelagert ist und dass der Auflagestab aus einer horizontalen ersten Betriebsstellung um einen Winkel 90° < α < 180° in eine zweite Betriebsstellung verschwenkbar ist, wozu erste und zweite Anschlagbegrenzungsmittel vorgesehen sind.

Durch den bügelartigen Auflagestab kann der Aufsatz sowohl zum Aufbacken von Brötchen als auch zum Warmhalten der gerösteten Brotscheiben verwendet werden. Dieser Auflagestab ist schwenkbar an den Tragarmen angelenkt und kann aus der ersten Betriebsstellung "der Aufbackstellung für Brötchen" in die zweite Betriebsstellung "die Warmhaltestellung" um seine Drehachse geschwenkt werden. In dieser Stellung können die Brotscheiben im Brotröster geröstet werden und die gerösteten Brotscheiben auf den Auflagestäben zum Warmhalten durch die aus dem Röstraum austretende erhitzte Luft abgelegt werden. An den Tragarmen sind Haltenocken vorgesehen, welche die Schwenkbewegung des als Bügel ausgebildeten Auflagestabes begrenzen. Alternativ hierzu sind an dem bügelartigen Auflagestab Halterungen angeformt, welche die Funktion der Haltenocken übernehmen.

Weiterhin ist aus der DE-GM 69 04 033 ein Brotröster mit zusätzlichem Rost veränderbarer Höhe bekannt, bei dem ein Dreh- und Schiebeknopf vorgesehen ist, dessen Achse und Halteteile des Rostes in Verbindung mit einer mit einem Schlitz versehenen Seitenwand eine Klemmvorrichtung darstellen. Durch das Drehen des Knopfes wird dieser angezogen, wodurch die Halteteile 8 und somit der Rost 7 in der gewünschten Position fixiert werden.

Schließlich ist aus der DE 92 16 648 U1 ein elektrischer Brotröster mit einem zweiseitig gelagerten Grillrost bekannt ist. Der weit auskragende Rost ist aufgrund der Elastizität des Drahtes labil. Um diesen Nachteil zu beseitigen, ist eine recht komplizierte Vorrichtung aus Hubbegrenzungsarm und einer Rasteinrichtung vorgesehen, wodurch der Rost in der Betriebsstellung leicht geneigt ist.

Wie die vorstehende Würdigung des Standes der Technik aufzeigt, sind unterschiedliche Ausführungsformen von elektrisch beheizten Haushaltskleingeräten bekannt. Jedes dieser Geräte ist in besonderer Weise für den jeweiligen Anwendungszweck ausgestaltet, so daß in der Regel zur Zubereitung beispielsweise von Toast und gekochten Eiern mehrere Geräte benutzt werden müssen. Obwohl zudem seit Jahrzehnten unterschiedlich ausgestaltete elektrische Brotröster oder Toaster mit integriertem oder als Aufsatz ausgestalteten Brötchenrost (auch Auflagerost oder Brötchen - Auflagerost oder Brötchenaufsatz genannt) bekannt sind, hat dies niemand veranlassen können, Überlegungen zur Verbesserung in Richtung einer verbesserten Hubbegrenzungs- und Rasteinrichtung mit geringem konstruktiven Aufwand anzustellen, die eine einfache und sichere Bedienung ermöglicht.

Der Erfindung liegt gegenüber dem beschriebenen Stand der Technik die Aufgabe zugrunde, ein elektrisch beheiztes Haushaltskleingerät, insbesondere Toaster derart auszugestalten, dass ein Garen von Speisen ohne die Benutzung von Wasser ermöglicht wird und dass der Toaster eine Hubbegrenzungs- und Rasteinrichtung mit geringem konstruktiven Aufwand aufweist, die eine einfache und sichere Bedienung ermöglicht.

Diese Aufgabe wird, ausgehend von einem elektrisch beheizten Haushaltskleingerät mit den Merkmalen im Oberbegriff des Patentanspruchs 1, dadurch gelöst, dass als Zusatz anstelle von Drahtkäfig und den diesen mittig durchsetzenden Stab eine Rollwendeeinrichtung vorgesehen ist, welche aus einer nach beiden Seiten hin offenen Drahtröhre und mindestens zwei sich parallel zum Brotaufnahmeschlitz und im Abstand voneinander erstreckenden, drehbeweglich gelagerten Auflageroststäben besteht, dass die Drahtröhre auf den Auflageroststäben aufliegt und dass mindestens einer der Auflageroststäbe von einem mechanisch aufziehbaren Federantrieb oder einem Motor angetrieben wird.

Das erfindungsgemäße Haushaltskleingerät weist den Vorteil auf, dass auf überraschend einfache Art und Weise ein gleichmäßiges Garen von Speisen ohne die Verwendung von Wasser oder Wasserdampf erzielt werden kann. Im Vergleich zu einem elektrischen Eierkocher entfällt die Notwendigkeit, die Wassermenge entsprechend dem gewünschten Härtegrad (weich, mittel und hart) vorher festzulegen, sondern während des Garens kann der Benutzer noch seinen Wunsch entsprechend abändern. Weiterhin ist von Vorteil, dass völlig unterschiedliche Nahrungsmittel wie Brötchen (auch Teiglinge), Kartoffeln, Würstchen usw. gegart werden können. Der Erfindung liegt dabei die Erkenntnis zugrunde, dass durch die sehr heiße Luft in Kombination mit ständigem Drehen des Grillguts, das Grillgut gleichmäßig umströmt wird und somit kaum Temparaturunterschiede im Grillgut auftreten. Weiterhin ist von Vorteil, dass sowohl eine kostengünstige Fertigung des erfindungsgemäßen Haushaltskleingeräts als auch eine hohe Funktionstüchtigkeit gewährleistet ist, insbesondere ohne dass hiermit eine umständliche oder schwierige Handhabung für den Benutzer verbunden ist. Die Auflageroststäbe bieten eine sichere Führung auch für kleines Röstgut, wobei durch mäanderförmige Ausführung eines der Auflageroststäbe die Auflagefläche vergrößert werden kann. Weiterhin ist von Vorteil, dass die Auflageroststäbe den ästhetischen Gesamteindruck nicht stören, die Reinigung des Haushaltskleingeräts nicht erschweren und einen geringen Fertigungsaufwand erfordern.

Es liegt auf der Hand, dass die Rollwendeeinrichtung mit zylindrischen Röhren gemäß der US-PS 5,058,494 keine Anregung für deren Einsatz bei einem Toaster geben kann. Ergänzend ist darauf hinzuweisen, dass dort deutlich zwei völlig voneinander getrennte Wege für die Auflage bzw. Halterung des Grillguts aufzeigt, nämlich entweder eine Rollwendeeinrichtung, wobei das Garen an der heißen Oberfläche der zylindrischen Röhren ähnlich wie bei einem heißen Stein erfolgt, oder eine Dreheinrichtung. Weder ist der US-PS 5,058,494 die Ausgestaltung von drehbaren Auflageroststäben zu entnehmen noch ist vorgesehen, den Auflagerost, auf dem das Zubehörteil Rollwende-/Dreheinrichtung steht, wegzulassen.

Gleiches gilt fiir eine Zusatzeinrichtung für einen Grill gemäß der US-PS 2,253,438, welche eine Vielzahl von parallel liegenden zylindrischen Gitterröhren, mindestens jedoch drei, aufweist. Diese Gitterröhren werden mittels Zahnrad und Kette über eine mittig durch die Gitterröhre verlaufende Drehachse angetrieben.

Schließlich ist aus der US-PS 3,331,308 ein Grill bekannt, bei dem gemischt motorisch angetriebene Fleischspieße oder auf diese aufsteckbare Röhren vorgesehen sind.

Weiterhin wird diese Aufgabe, ausgehend von einem Toaster mit Grillrost mit den Merkmalen im Oberbegriff des Patentanspruchs 10, dadurch gelöst, dass entweder der Stellfinger oder die Handhabe als Teil einer kombinierten Hubbegrenzungs- und Rasteinrichtung ausgestaltet und am Anschlag der Arbeitslage verrastbar ist und welcher die Rollwendeeinrichtung trägt.

Ein solcher Toaster weist den Vorteil auf, dass auf überraschend einfache Art und Weise ein konstruktiv einfacher Aufbau für die Höhenverstellung des Grillrostes geschaffen werden kann, welcher eine hohe Funktionstüchtigkeit aufweist und ohne dass hiermit eine umständliche oder schwierige Handhabung für den Benutzer verbunden ist. Auch bei längerem und häufigen Gebrauch trägt die Rastverbindung zuverlässig und dauerhaft unterschiedlich großes und dementsprechend auch unterschiedlich schweres Röstgut. Weiterhin ist von Vorteil, dass der erfindungsgemäße Toaster mit Ablage, welche zusätzlich das Warmhalten des Röstguts ermöglicht, kostengünstig gefertigt werden kann. Um diese Ablage für das Röstgut zu schaffen und dessen Warmhalten zu ermöglichen, kann weiterhin vorgesehen werden, entweder am Gehäuse einen Ablagekorb bzw. einen Aufnahmerahmen zu befestigen, welcher an der Gehäusewand anliegt, oder mindestens eine Seitenwand des Gehäuses schwenkbar zu lagern, wobei in der Offenstellung der Seitenwand eine Ablage zum Warmhalten von Röstgut frei zugänglich wird. Dadurch können Kundenanforderungen hinsichtlich Warmhaltetemperatur erfüllt werden, ohne dass Nachteile hinsichtlich einfacher Handhabung oder wesentlich höhere Zusatzkosten in Kauf genommen werden müssen. In Kombination mit der Rollwendeeinrichtung kann mittels Hubbegrenzungs- und Rasteinrichtung ein Garen oder Warmhalten beliebiger Lebensmittel ermöglicht werden.

In Weiterbildung der Erfindung nach Patentanspruch 2, weist mindestens der drehbeweglich gelagerte und angetriebene Auflageroststab eine Riffelung oder einen Überzug mit hohem Reibwiderstand auf.

Dadurch ist sichergestellt, dass sowohl eine kostengünstige Herstellung als auch zuverlässig die Rollwendebewegung des Grillgutes ermöglicht wird.

In Weiterbildung der Erfindung nach Patentanspruch 3, ist mindestens einer der parallelen Auflageroststäbe des Auflagerostes bezüglich des Abstandes der Stäbe zueinander verschiebbar gelagert.

Diese Weiterbildung weist den Vorteil auf, dass mittels des von Hand verschiebbaren Auflageroststabs eine einfache Anpassung an die Größe des Grillgutes z.B. Brötchen, Kartoffel, Ei, Würstchen erfolgen kann.

In Ausgestaltung der Erfindung nach Patentanspruch 4, ist die Rollwendeeinrichtung als Aufsatz für einen Toaster ausgestaltet und die Auflageroststäbe sind höhenverstellbar im Aufsatz gelagert. Ferner weisen Aufsatz und Toaster eine in der Betriebsstellung miteinander verrastende Einrichtung auf.

Diese Ausgestaltung weist den Vorteil auf, dass auf einfache Art und Weise ein Zusatznutzen fiir einen Toaster geschaffen wird. Durch die Höhenverstellung der Auflageroststäbe kann die Temperatur, welcher das Grillgut ausgesetzt ist, verändert (Übergang von Wärmestrahlung zu Konvektion) und die Garzeit beeinflußt werden. Weiterhin ist von Vorteil, dass das Garen bzw. der Bräunungsgrad, beispielsweise von Teiglingen, gut beobachtet werden kann und gleichzeitig sowohl Backwaren als auch Eier zubereitet werden können. In der Praxis liegen die Garzeiten für Würstchen bei 5 Minuten, für Eier zwischen 11 Minuten (weiche Eier) und 15 Minuten (harte Eier), für Kartoffeln bei ca. 20 Minuten usw. Weiterhin ist von Vorteil, dass aufgrund des stetig ablaufenden Aufheizvorgangs, das Ei keinem Temperatursprung ausgesetzt wird und somit die Gefahr des Platzens relativ gering ist; zudem beeinflussen Alter und Größe der Eier sowie Umgebungstemperatur (Kühlschrank) die Garzeit kaum. Durch den relativ langen Zeitraum zwischen weichen und harten Eiern kann der Benutzer sehr genau den Härtegrad der Eier festlegen. Ferner ist von Vorteil, dass z.B. für eine Federrastung eine geringe Präzision verlangt wird und damit der Fertigungsaufwand gering ist.

Vorzugsweise ist, gemäß Patentanspruch 5, im Gehäuse oder im Aufsatz der mechanisch aufziehbare Federantrieb oder der Elektromotor vorgesehen und der Federantrieb oder der Elektromotor steht über ein Getriebe mit dem Auflageroststab oder den Auflageroststäben in Eingriff.

Mit dieser Ausgestaltung kann auf einfache Art und Weise auch ein handelsüblicher Toaster nachgerüstet werden. Es ist somit möglich, den Toaster nach Wahl und Bedarf mit dem erfindungsgemäßen Aufsatz zur Zubereitung von einem oder mehreren weichen oder harten Eiern, zum Aufbacken von Brötchen oder von Toastscheiben zu benutzen. Bei einer Kombination mit dem Toaster gemäß Patentanspruch 11 steht ein vielseitig einsetzbares Haushaltskleingerät mit einer Reihe von Zusatznutzen zur Verfügung.

In Weiterbildung der Erfindung ist, gemäß Patentanspruch 6, im Aufsatz als Stromversorgung für den Elektromotor eine Batterie oder ein induktiv, kapazitiv oder optisch gespeister Akkumulator vorgesehen oder die Stromversorgung des Elektromotors erfolgt mittels Trenntransformator und an der Oberseite des Toasters befindlicher Kontakteinrichtung.

Diese Weiterbildung der Erfindung ermöglicht den Aufbau einer Produktgruppe mit unterschiedlichen Preisen und, da auf Zubehör anderer Warengruppen (wie beispielsweise Stromversorgungseinrichtungen fiir elektrische Zahnbürsten) zurückgegriffen werden kann, gleichzeitig eine kostengünstige Herstellung. Weiterhin kann durch die galvanische Trennung die Einhaltung von Sicherheitsvorschriften (Niederspannung) gewährleistet werden.

Vorzugsweise sind, gemäß Patentanspruch 7, die Auflageroststäbe zueinander versetzt angeordnet und zwischen Öffnung und Auflageroststäben ist ein Gitter angeordnet.

Diese Ausgestaltung der Erfindung weist den Vorteil auf, dass durch das Gitter einerseits die Stabilität des Aufsatzes erhöht wird und andererseits auf einfache Art und Weise ein Tropfschutz für die Heizkammer geschaffen wird. Zur Verbesserung der Führung großvolumigen Röstgutes und zur weiteren Erhöhung der Stabilität sind die Auflageroststäbe zueinander versetzt angeordnet.

Weiterhin ist, gemäß Patentanspruch 8, in der Heizkammer als Heizelement ein federartig geschlitztes und gebogenes Nirosta-Blech vorgesehen.

Ein solches Heizelement aus nichtrostendem Stahl ermöglicht eine kompakte Bauform des Haushaltskleingeräts, da aufgrund des niedrigen Wärmeleitvermögens von Nirosta-Blech, dieses auf der unteren und kalten Seite in einem Kunststoffteil und auf der gegenüberliegenden oberen und heißen Seite in einem Keramikteil gehalten werden kann. Ein solches Haushaltskleingerät ist einfach zu handhaben und weist den Vorteil auf, dass dieses auch für ein wasserloses Garen z.B. einer Vielzahl von Eiern ausgestaltet werden kann, wobei fiir ein ggf. erforderliches besseres Warmhalten oder Nachrösten, die Seitenwand geöffnet werden kann. Weiterhin ist von Vorteil, dass der zusätzliche konstruktive Aufwand für die Ablage und damit der Fertigungsaufwand gering sind.

Vorzugsweise ist, gemäß Patentanspruch 9, zumindestens auf dem motorisch angetriebenen Auflageroststab ein Zahnrad angeordnet, welches in die Raster-Öffnungen der Drahtröhre eingreift.

Diese Ausgestaltung der Erfindung weist den Vorteil auf, dass die aufgelegte Drahtröhre bzw. ein entsprechend ausgestalteter und beid-/einseitig offener Behälter zum Reinigen einfach abgehoben werden kann und dass durch das langsame Rollen der Drahtröhre, die zu garenden Lebensmittel/Röstgut nach dem Zufallsprinzip langsam umgerollt werden. Um auch für großvolumige Lebensmittel das Rollverhalten zu verbessern, können aus der Drahtröhre u.a. Stacheln oder ballige dreieckförmige, Erhebungen herausgedrückt/angeordnet werden. Fertigungstechnisch kann die Drahtröhre aus Bandmaterial kostengünstig hergestellt werden, welches in zylindrischer oder elliptischer Form z.B. zusammengeschweißt oder -gebogen wird.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:
- FIG. 1: eine Schrägansicht einer ersten Ausführungsform,
- FIG. 2: eine Draufsicht, teilweise im Schnitt auf eine zweite Ausführungsform,
- FIG. 3: eine perspektivische Darstellung einer dritten Ausführungsform,
- FIG. 4: eine Seitenansicht des Aufsatzes von FIG. 3
- FIG. 5: eine Ansicht entlang der Linie A-A nach FIG. 4,
- FIG. 6: die Schnittansicht entlang X nach FIG. 4 der dritten Ausführungsform des erfindungsgemäßen Haushaltskleingeräts bzw. Aufsatzes,
- FIG. 7: eine Schrägansicht einer ersten Ausführungsform mit Ablage und einem Stellfinger,
- FIG. 8: eine Schrägansicht einer zweiten Ausführungsform mit Ablage und einem Stellfinger,
- FIG. 9: eine Schrägansicht, teilweise im Schnitt, einer dritten Ausführungsform mit zwei Stellfingern und
- FIG. 10: eine Schrägansicht, teilweise im Schnitt, einer vierten Ausführungsform des erfindungsgemäßen Toasters mit zwei Stellfingern.

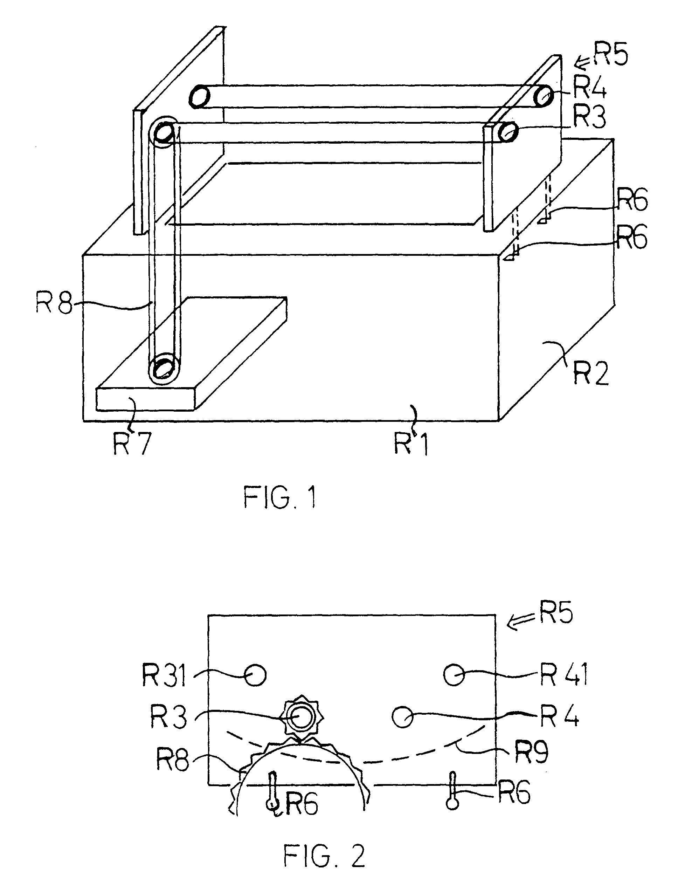

FIG. 1 zeigt eine Schrägansicht einer ersten Ausführungsform des erfindungsgemäßen Haushaltskleingeräts in Form eines Aufsatzes R5 auf einen handelsüblichen Toaster. Erfindungsgemäß ist an der Gehäuseöffnung oberhalb der Heizkammer R2 des Toasters als Rollwendeeinrichtung ein Auflagerost vorgesehen, welcher aus mindestens zwei sich parallel zur Öffnung und im Abstand voneinander erstreckenden Auflageroststäben R3, R4 besteht, wobei einer der Auflageroststäbe, in FIG. 1 der Auflageroststab R3, drehbeweglich gelagert und angetrieben, während der andere Auflageroststab R4 des Auflagerostes bezüglich des Abstandes der Stäbe zueinander verschiebbar gelagert ist.

Aufgrund der unterschiedlichen Oberflächenstruktur und -beschaffenheit des Röstguts hat es sich in der Praxis als vorteilhaft herausgestellt, mindestens den oder die angetriebenen Auflageroststäbe, in FIG. 1 der Auflageroststab R3, mit einer Riffelung oder einem Überzug mit hohem Reibwiderstand zu versehen. Desweiteren sind die Auflageroststäbe R3, R4 höhenverstellbar im Aufsatz R5 gelagert. Bei handelsüblichen Toastern liegt die Temperatur an der Mikanit-Heizung (Glimmer) in der Heizkammer R2 über ca. 600° C an der Öffnung des Gehäuses R1 bei ca. 180° C und in einem Abstand von 2 cm bei ca. 150° C, so daß durch die Höhenverstellung der Auflageroststäbe R3, R4 eine Anpassung an die Temperatur, welcher das Grillgut ausgesetzt ist, vorgenommen werden kann.

Bei der in FIG. 1 dargestellten Ausführungsform ist im Gehäuse R1 ein Elektromotor R7 angeordnet, welcher über ein Getriebe R8 mit dem Auflageroststab R3 gekoppelt ist. Als Getriebe können unterschiedliche Ausführungsformen wie Reibrad-, Zahnrad- (siehe FIG. 2), Seil- (siehe Fig. 1), Keil- bzw. Zahnriemen-, Kettengetriebe benutzt werden; je nachdem wie die kraft- oder formschlüssige Verbindung (z.B. verrastende Einrichtung 6) zwischen Aufsatz R5 und Toaster in Kombination mit einer Höhenverstellung der Auflageroststäbe ausgestaltet ist (z.B. Seil- oder Kettenspanner). Alternativ kann der Elektromotor R7 auch im Aufsatz R5 angeordnet werden, wobei als Stromversorgung fiir den Elektromotor eine Batterie oder ein induktiv, kapazitiv oder optisch (Lampe und Phototransistor) gespeister Akkumulator vorgesehen ist. Schließlich kann auch ein mechanisch aufziehbarer Federantrieb benutzt werden. Hinsichtlich Zeitsteuerung von Heizung und Antrieb ist zu berücksichtigen, dass bei allen diesen Ausführungsformen die Rollwendeeinrichtung länger als die Heizung in Betrieb sein soll. Hierfür kann die Zeit/Temperatursteuerung eines Toasters (Nachregelung für gleichen Bräunungsgrad durch eine Steuereinrichtung in Form eines ASIC, auch programmgesteuert) oder das aus der DE 29 24 909 C2 bekannte Zeitglied benutzt werden.

Bei der in FIG. 2 dargestellten Ausführungsform sind die vier Auflageroststäbe R3, R31, R4 und R41 zueinander versetzt angeordnet und zwischen Öffnung des Haushaltskleingeräts mit Heizkammer R2 und Auflageroststäben R3, R31, R4 und R41 ist ein Gitter R9 angeordnet, wobei in der Heizkammer R2 als Heizelement ein federartig geschlitztes und gebogenes Nirosta-Blech vorgesehen werden kann.

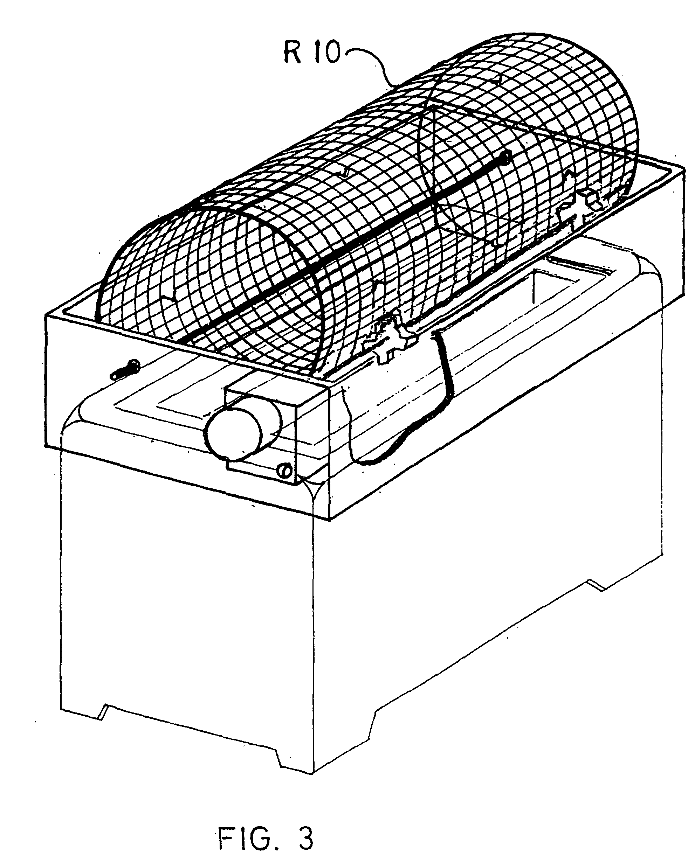

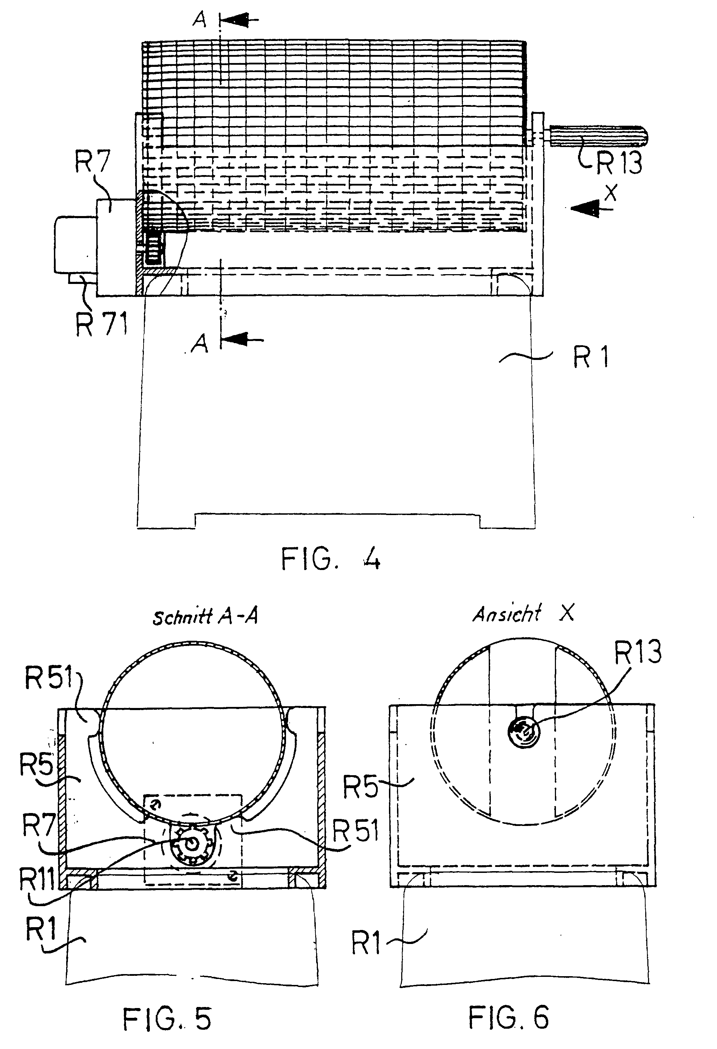

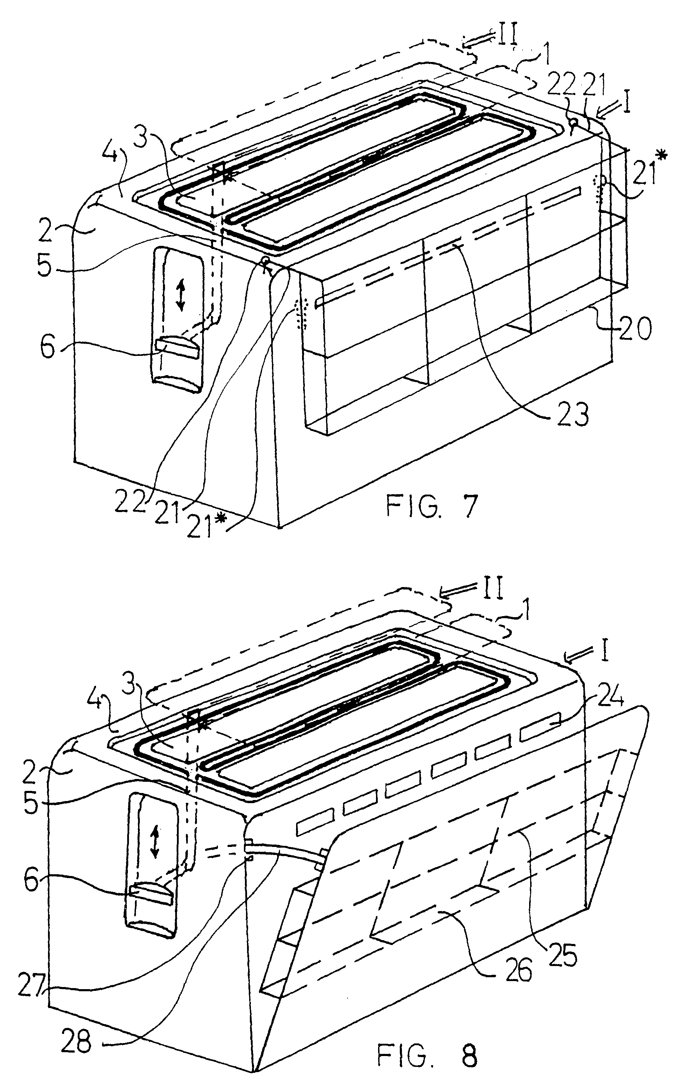

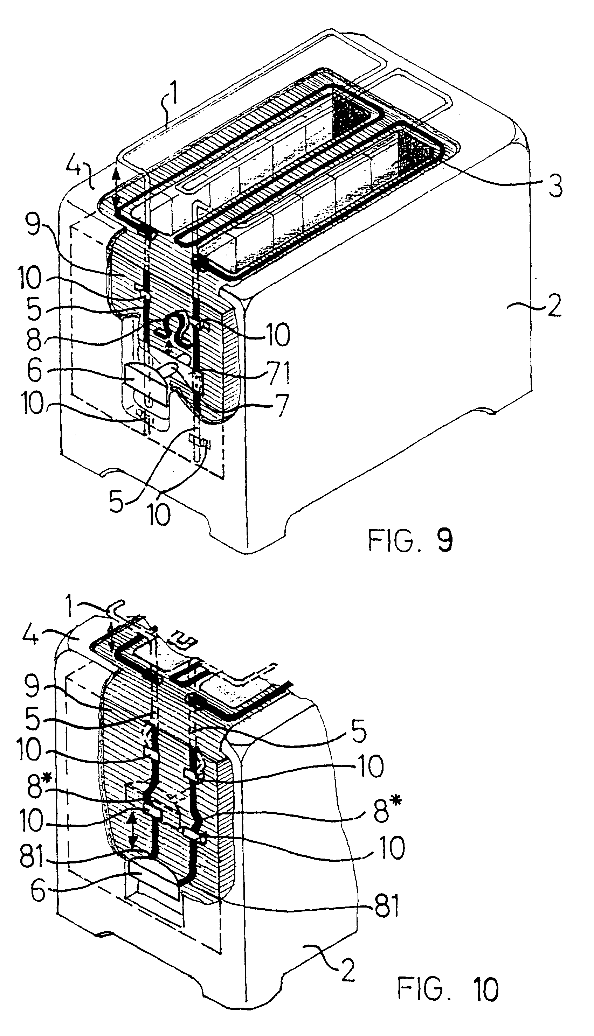

Bei der in den FIG. 3 bis 6 dargestellten dritten Ausführungsform des erfindungsgemäßen Haushaltskleingeräts besteht die Rollwendeeinrichtung aus einer nach beiden Seiten offenen Drahtröhre R10 und mindestens einem auf dem motorisch angetriebenen Auflageroststab R3 angeordneten Zahnrad R11, welches in die Raster-Öffnungen der Drahtröhre R10 eingreift. Durch die offene Drahtröhre R10 kann deren Befüllen und Entleeren auch während des Betriebs erfolgen. Vorzugsweise weist die Drahtröhre R10 nach innen ragende Erhebungen R12 auf, welche das Rollverhalten von großen Lebensmitteln verbessern (siehe FIG. 3). Der Aufsatz R5 ist bei der in den FIG. 3 bis 6 dargestellten dritten Ausführungsform als nach oben und unten offenes Rahmengehäuse ausgestaltet, dessen Seitenwände vorzugsweise größer als der Durchmesser der Drahtröhre R10 sind. Zur Verringerung der Reibung zwischen Drahtröhre R10 und der Seitenwand im Betrieb, kann diese am Umfang verteilte ballige Erhebungen R51 aufweisen; zudem ist dadurch eine genauen Positionierung der Drahtröhre R10 möglich (siehe FIG. 5). Damit der Aufsatz R5 einfach abgehoben werden kann, kann weiterhin ein Griff R13 auf der dem Elektromotor R7 gegenüberliegenden Seite angeordnet werden (siehe FIG. 4 und FIG. 6). Der Elektromotor R7 kann entweder mittels separaten Schalter R71 oder bei Betätigung der Handhabe für den Grillrost oder des Zeitstell-Drehknopfes des Toasters (siehe Handhabe 6, Grillrost 1 FIG. 7 bis FIG. 10) ein/ausgeschaltet werden.

Das erfindungsgemäße Haushaltskleingerät ist einfach zu handhaben und weist den Vorteil auf, dass dieses auch für ein wasserloses Garen z.B. zum Garen anstelle von Kochen von rohen Eiern, zum Aufbacken und Ablegen sowie Warmhalten von Brötchen, Pizzastücken, Toastscheiben u.a. ausgestaltet werden kann. In der erfindungsgemäßen Kombination als Aufsatz R5 für einen Toaster (Siehe FIG. 7 bis 10) entfällt für den Benutzer die sonst erforderliche Bedienung von Toaster und Eierkocher. Weiterhin ist von Vorteil, dass der zusätzliche konstruktive Aufwand für den Aufsatz R5 und damit der Fertigungsaufwand gering sind. Durch die Verwendung von heißer Luft kann auch hinsichtlich Temperaturunterschieden empfindliches Grillgut, wie beispielsweise Eier (Koagulieren ab ca. 80° C; in der Praxis erst dann Rißbildung beobachtbar), gegart werden, ohne dass ein Anpicken/Abschrecken erforderlich ist.

Wie aus nachfolgender Beschreibung ersichtlich ist, steht bei einer Kombination mit dem in den FIG. 7 bis 10 dargestellten Toaster ein vielseitig einsetzbares Haushaltskleingerät mit einer Reihe von Zusatznutzen zur Verfügung. Dabei wird von einem Toaster mit Grillrost 1 und einem Gehäuse 2 mit mindestens einem kopfseitigen Einsteckschlitz 3 für Brotscheiben ausgegangen, wobei der Grillrost 1 nur einseitig an einem Stellfinger 5 gelagert und aus einer Ruhelage I in eine Arbeitslage II mittels einer mit dem Stellfinger 5 verbundenen Handhabe 6 höhenverstellbar ist. Beim erfindungsgemäßen Toaster ist entweder der Stellfinger 5 oder die Handhabe 6 als Teil einer kombinierten Hubbegrenzungs- und Rasteinrichtung ausgestaltet und am Anschlag der Arbeitslage II verrastbar, wobei dieser die Rollwendeeinrichtung trägt.

Gemäß einer bevorzugten Ausgestaltung mit zwei kopfseitigen Einsteckschlitzen 3 ist der Grillrost 1 als Brötchenhalter derartig mäanderförmig ausgestaltet, dass die Einsteckschlitze 3 frei bleiben und dass Anfang und Ende des Mäanders abgekröpft sind und jeweils in einen parallel zur Stirnseite des Toasters verlaufenden Stellfinger 5 übergehen. Bei dieser Ausgestaltung bietet die große Auflagefläche eine sichere Auflage auch für kleines Röstgut. Weiterhin ist von Vorteil, dass der Grillrost 1 den ästhetischen Gesamteindruck nicht stört und daß die Reinigung des Toasters durch den Grillrost 1 nicht erschwert wird. Die Vermeidung jeglicher Schwenkbewegung bewirkt einen geringen Fertigungsaufwand.

In besonderer Weiterbildung sind der Grillrost 1 und die Stellfinger 5 als Rundstab ausgestaltet und Anfang und Ende des Mäanders liegen auf der gleichen Stirnseite. Diese Weiterbildung weist den Vorteil auf, dass Handhabung und Herstellung vereinfacht sind und dass mittels der breiten Lagerfläche des Grillrostes 1, dessen Unterstützung auch bei einem Zweischlitz-Toaster ermöglicht wird.

Vorzugsweise weist die Handhabe 6 auf der dem Toaster zugewandten Seite einen Zapfen 7 auf, welcher in der Arbeitslage in eine Rastkurve 8 eingreift. Hierdurch ist sichergestellt, dass sowohl eine kostengünstige Herstellung als auch ein sicherer Halt in der Arbeitslage II des Grillrostes 1 ermöglicht wird.

Die Rastkurve 8 kann vorzugsweise als zwischen den Stellfingern 5 liegende Omega-Feder ausgestaltet werden, welche außen an der Röstkammer 9 befestigt ist. Weiterhin ist der Zapfen 7 durch ein Querteil 71 am Stellfinger 5 gelagert. Dadurch wird für die Federrastung eine geringe Präzision verlangt und damit ist der Fertigungsaufwand gering. Weiterhin ist von Vorteil, dass durch unterschiedliche Ausgestaltung der Gleitbahn der Omega-Feder gleichzeitig eine leichtgängige Verrastung und eine schwergängigere Entrastung einstellbar ist.

Der Stellfinger 5 kann auch vorzugsweise als Federteil mit mindestens zwei Führungsteile 10 ausgestaltet werden, welche außen an der Röstkammer 9 befestigt sind. Bei Verschiebung der Handhabe 6 aus der Ruhelage I parallel zur Kopffläche 4 in die Arbeitslage II werden diese dabei zunehmend vorgespannt. Weiterhin ist ein Teil des Stellfingers 5 als Rastkurve 8* derart ausgestaltet, dass diese in der Arbeitslage II an einem der Führungsteile 10 einsitzt. Demgemäß wird beim Verschieben der Handhabe 6 kontinuierlich ein zunehmender Kraftaufwand erforderlich, welcher beim Überwinden der Raststellung schlagartig abfällt, wodurch dem Benutzer die Herstellung der Rastverbindung deutlich spürbar vermittelt wird. Weiterhin ist von Vorteil, daß für die Federrastung eine geringe Präzision verlangt wird und damit der Fertigungsaufwand gering ist.

Vorzugsweise kann das Führungsteil 10 als L-förmiges Stanzteil aus der Röstkammerwand und die Rastkurve 8* als Biegung mit stumpfen Winkel ausgestaltet werden. Bei einem Toaster mit Röstkammer 9 wird mit dieser Ausgestaltung der Führungen 10 und der Rastkurve 8* ein einfaches und zuverlässiges Verrasten in der Arbeitsstellung ermöglicht. Weiterhin ist der Fertigungsaufwand gering.

In weiterer Ausgestaltung geht der Stellfinger 5 an einem Ende in eine Abkröpfung 81 über, welche sowohl als Befestigung der Handhabe 6 als auch als Anschlag zur Begrenzung des Verschiebewegs der Handhabe 6 dient. Dadurch wird eine kostengünstige Herstellung von Handhabe 6 und Stellfinger 5 ermöglicht.

Vorzugsweise ist der Stellfinger 5 stabförmig ausgestaltet und in einer Ausnehmung der Handhabe 6 durch Reibschluß oder Formschluß befestigt. Dadurch ist zusätzlich die Stabilität der Handhabe erhöht. Zur Vergrößerung des Reibschlusses kann beispielsweise eine Riffelung am freien Ende des Stellfingers 5 (z.B. aus Metall-Draht) vorgesehen sein, welches in ein Sackloch auf der Rückseite der Handhabe 6 (z.B. runder Knopf aus Plastikmaterial) eingepresst wird.

Gemäß einer besonderen Ausgestaltung wird am Gehäuse 2 ein Ablagekorb oder ein Aufnahmerahmen 20 befestigt, welcher an der Gehäusewand anliegt. Mit dieser Ausgestaltung wird sowohl eine Ablage 20 für geröstete Brotscheiben geschaffen als auch ein Warmhalten der gerösteten Brotscheiben ermöglicht. Der Aufnahmerahmen 20 kann beispielsweise aus einzelnen L-förmigen Stegen bestehen, welche über Querstege miteinander verbunden sind und die Seitenwand selbst bildet eine Seite der Ablage. Vorzugsweise wird die Ablage 20 im oberen Bereich der Seitenwand angeordnet und es ist die Höhe der Ablage 20 derart dimensioniert, dass in der Regel das Röstgut, wie beispielsweise Toastscheiben, über die Kopffläche 4 hinausragen. Dadurch kann dieses zum Herausnehmen beidseitig angefaßt werden; zudem ist die Warmhaltetemperatur größer.

Zur formschlüssigen Befestigung der Ablage 20 kann vorzugsweise ein abgekröpfter Lagerabschnitt 21 vorgesehen werden, welcher in eine Öffnung 22 des Gehäuses 2 eingreift. Der Lagerabschnitt 21 kann beispielsweise L-förmig ausgestaltet sein und sein kurzes Teil greift in die Öffnung 22 ein; durch entsprechende Schräge der Öffnung 22 kann das Einsetzen des Ablagekorbs 20 erleichtert werden. Vorzugsweise ist beidseitig im Randbereich der Kopffläche 4 eine Öffnung vorgesehen und der Lagerabschnitt 21, welcher an seinem freien Ende als Zapfen ausgebildet ist, wird von oben her eingehängt. Es ist auch möglich, dies als Rastverbindung auszugestalten oder auch entsprechende Öffnungen, z.B. Schlitze in der Seitenwand vorzusehen, in welche das freie Ende des Lagerabschnitts 21 eingeführt (eingehängt) und ggf. verrastet oder geklemmt wird.

Ist in besonderer Ausgestaltung die Gehäusewand im Bereich der Ablage 20 durchbrochen, beispielsweise durch Schlitze, so werden die gerösteten Brotscheiben oder Pizzastücke o.ä. durch die aus dem Röstraum 9 austretende erhitzte Luft warmgehalten.

Vorzugsweise ist mindestens eine Seitenwand des Gehäuses 2 schwenkbar gelagert ist und in der Offenstellung der Seitenwand wird eine Ablage 25 zum Warmhalten von Röstgut frei zugänglich. Dadurch ist kein zusätzliches Zubehörteil als Ablage 25 bzw. zum Warmhalten erforderlich. Auch wird der ästhetische Gesamteindruck des Toasters, z.B. ein Dekorrrahmen, nicht verdeckt und zudem ist eine kompakte Bauform des Toasters, trotz Schaffung einer Ablage 25 (mit zusätzlicher Warmhaltefunktion), gewährleistet. Die Einrichtung ist einfach zu handhaben und weist z.B. den Vorteil auf, dass für ein ggf. erforderliches besseres Warmhalten oder Nachrösten, die Seitenwand wieder in Schließrichtung zurückbewegt (z.B. Rastzwischenstellung) werden kann. Weiterhin ist von Vorteil, dass der zusätzliche konstruktive Aufwand für die Ablage 25 und damit der Fertigungsaufwand gering sind.

In Weiterbildung ist die Ablage 25 als Ablagekorb oder Ablagerahmen ausgestaltet, welcher auf der Rückseite der schwenkbaren Seitenwand des Gehäuses 2 befestigt ist. Bei dieser Weiterbildung wird auch bei einem Toaster mit Röstkammer 9 die Ablage 25 bzw. das Warmhalten von Röstgut auf einfache Art und Weise ermöglicht. Der Ablagerahmen kann beispielsweise aus einzelnen L-förmigen Stegen bestehen, welche über Querstege miteinander verbunden sind und eine Seite der Ablage 25 kann durch die Seitenwand selbst gebildet werden. Zur Fertigungsvereinfachung können die jeweils gegenüberliegenden Seitenwände schwenkbar ausgestaltet sein.

Vorzugsweise weist die Seitenwand des Gehäuses 2 eine parallel zur Kopffläche 4 verlaufende Auflage auf 26. Durch die Auflage 26 wird zuverlässig verhindert, daß das Röstgut an der geöffneten Seitenwand entlang rutschen kann, bis es an der Röstkammerwand (die in Praxis bis zu 100° C heiß werden kann) bzw. an der Heizung anstoßen würde. Weiterhin ist von Vorteil, dass durch entsprechende Einstellung der Auflagenhöhe (beispielsweise in der Höhe verschiebbares Ausziehprofil) ein einfaches Herausnehmen des über die Kopffläche 4 herausragenden Röstgutes gewährleistet wird. Ein versehentliches Berühren der heißen Röstkammerwand beim Herausnehmen des Röstguts aus der Ablage 25 oder ein versehentliches Schließen der Seitenwand mit in der Ablage befindlichen Röstgut kann zuverlässig verhindert werden.

Die Seitenwand des Gehäuses 2 kann eine Führung 28 aufweisen, welche in ein an der Innenseite der Stirnwand des Toasters oder in ein an der Außenseite der Röstkammer 9 angeordnetes Anschlagmittel 27 eingreift. Durch Begrenzung der Schwenkbewegung (auch Zwischenstellungen möglich) kann einerseits die Beeinflussung des Röstbilds bei geöffneter Seitenwand gering gehalten werden, andererseits ist ein Herabfallen der Seitenwand ausgeschlossen. Die Führung 28 kann auch über einen biegsamen Stellfinger oder entsprechend ausgestalteten Schwenkmechanismus derart mit der Handhabe 6 anlenkbar sein, dass bei Verschiebung der Handhabe 6 aus der Ruhelage I parallel zur Kopffläche 4 in die Arbeitslage II gleichzeitig die Seitenwand des Gehäuses 2 geöffnet wird. Um eine gleichmäßige "Offenstellung" zu erreichen, kann die Führung 28 beidseitig vorgesehen werden. Ist die Röstkammer 9 auf der Seite der Ablage 26 durchbrochen, so können höhere Warmhaltetemperaturen erzielt werden.

Vorzugsweise sind auf der Rückseite der Handhabe 6 mindestens zwei Nasen angeordnet, welche jeweils in einen parallel zur Stirnseite des Toasters verlaufenden Führungsschlitz eingreifen. Dadurch wird ein sonst mögliches Verdrehen der Handhabe 6 und dadurch, mittels der Stellfinger 5, ein Verdrehen des Grillrostes in der Horizontalen (beispielsweise zum Ableeren des heißen Röstguts) unterbunden, sowie eine planparallele Führung gewährleistet.

Die Erfindung ist nicht auf die dargestellten Ausführungsbeispiele beschränkt. Es ist beispielsweise im Rahmen der Erfindung denkbar, den Aufsatz im Mikrowellenherd einzusetzen und den Garvorgang bei laufender Rollwendeeinrichtung durchzuführen; die Rollwendeeinrichtung als im Gitter gelagerte Walzen auszugestalten; am (auswechselbaren) Auflagestab Erhebungen wie Stacheln, Zähnchen, Noppen auch als Seitenbegrenzungen oder unterschiedlicher Shore-Härte, z.B. von Shore-Härte 35 (elastisch) bis Shore-Härte 70 (steif), bzw. Länge der Stacheln bzw. entsprechende Kombinationen, wie diese insbesondere FIG. 3 mit Drahtrolle R10 und herausgedrückten Stacheln R12 o. dgl. zeigt, vorzusehen; anstelle der nach beiden Seiten offenen, einstückigen Drahtröhre eine zweiteilige aufklappbare Drahtröhre oder anstelle der Drahtröhre ein zylindrisch oder elliptisch geformtes Lochblech mit am Umfang ausgestalteter Spur, in welche der Antrieb eingreifen kann, vorzusehen; als Rastmittel sowohl für Aufsatz als auch für den Toaster jeweils einen Kugelschnäpper zu benutzen; den Grillrost bzw. die Rollwendeeinrichtung zusätzlich auf der gegenüberliegenden Stirnseite zu führen bzw. abzustützen (z.B. mittels abgekröpften Stab oder verschiebares/verrastbares Halteteil); bei einer Röstkammer mit Schlitzen, diese durch einen herausnehmbaren Metallstreifen zu öffnen, um ggf. in Kombination mit Leitblechen auch im Randbereich den heißen Luftstrom zu führen; die oberen Führungsteile selbst können eine Rastnocke für das Querteil aufweisen; als Führungsteile jeweils einen Lappen aus der Wand, beispielsweise aus der Röstkammerwand herausreißen; eine beidseitige Ablage auf der Kopffläche des Toasters und/oder in Kombination mit der Rollwendeeinrichtung rucksackähnlich aufzusetzen, am Aufsatz/Gehäuse eine Zeitanzeige/Stoppuhr/Zeitsteuerung für Toaster/Rollwendeeinrichtung anzuordnen usw.

Sinngemäß gelten die Vorteile des erfindungsgemäßen Haushaltskleingeräts, nämlich kostengünstige Herstellung bei gleichzeitig besonders einfacher Handhabung der Rollwendeeinrichtung, auch für die vorgenannten Ausgestaltungen und deren Anordnung. Alle dargestellten und beschriebenen Ausführungsmöglichkeiten, sowie alle in der Beschreibung und/oder Zeichnung offenbarten neuen Einzelmerkmale und ihre Kombination untereinander, sind erfindungswesentlich.

## Patentansprüche

1. Elektrisch beheiztes Haushaltskleingerät, insbesondere Toaster, mit einem Gehäuse (R1), mit mindestens einer nach oben hin offenen Heizkammer (R2), mit einem Zusatz in Form eines länglichen, an einem Stab befestigten Drahtkäfig und mit einem Drehantrieb für den den Drahtkäfig mittig durchsetzenden Stab, welcher beim Toasten auf dem Toaster im Abstand oberhalb des Brotaufnahmeschlitzes des Toasters gelagert ist und wobei der Drahtkäfig zum Einbringen von Gebäck geöffnet bzw. geschlossen werden kann, **dadurch gekennzeichnet, dass** als Zusatz anstelle von Drahtkäfig und den diesen mittig durchsetzenden Stab eine Rollwendeeinrichtung (R3, R4; R10, R11) vorgesehen ist, welche aus einer nach beiden Seiten hin offenen Drahtröhre (R10) und mindestens zwei sich parallel zum Brotaufnahmeschlitz und im Abstand voneinander erstreckenden, drehbeweglich gelagerten Auflageroststäben (R3, R4) besteht, dass die Drahtröhre (R10) auf den Auflageroststäben (R3, R4) aufliegt und dass mindestens einer der Auflageroststäbe (R3 oder R4) von einem mechanisch aufziehbaren Federantrieb oder einem Motor (R7) angetrieben wird.

2. Haushaltskleingerät nach Anspruch 1, **dadurch gekennzeichnet, dass** mindestens der drehbeweglich gelagerte und angetriebene Auflageroststab (R3, R4) eine Riffelung oder einen Überzug mit hohem Reibwiderstand aufweist.

3. Haushaltskleingerät nach Anspruch 1, **dadurch gekennzeichnet, dass** mindestens einer der parallelen Auflageroststäbe (R3, R4) des Auflagerostes bezüglich des Abstandes der Stäbe zueinander verschiebbar gelagert ist.

4. Haushaltskleingerät nach Anspruch 1, **dadurch gekennzeichnet, dass** die Rollwendeeinrichtung als Aufsatz (R5) fiir einen Toaster ausgestaltet ist, dass die Auflageroststäbe (R3, R4) höhenverstellbar im Aufsatz (R5) gelagert sind und dass Aufsatz (R5) und Toaster eine in der Betriebsstellung miteinander verrastende Einrichtung (R6) aufweisen.

5. Haushaltskleingerät nach Anspruch 1 oder 4, **dadurch gekennzeichnet, dass** im Gehäuse (R1) oder im Aufsatz (R5) der mechanisch aufziehbare Federantrieb oder der Elektromotor (R7) vorgesehen ist und dass Federantrieb oder Elektromotor (R7) über ein Getriebe (R8) mit dem Auflageroststab (R3) oder den Auflageroststäben (R3, R4) in Eingriff steht.

6. Haushaltskleingerät nach Anspruch 5, **dadurch gekennzeichnet, dass** im Aufsatz (R5) als Stromversorgung fiir den Elektromotor (R7) eine Batterie oder ein induktiv, kapazitiv oder optisch gespeister Akkumulator vorgesehen ist oder dass mittels Trenntransformator und an der Oberseite des Toasters befindlicher Kontakteinrichtung die Stromversorgung des Elektromotors erfolgt.

7. Haushaltskleingerät nach einem oder mehreren der Ansprüche 1 bis 6, **dadurch gekennzeichnet, dass** die Auflageroststäbe (R3, R31, R4 und R41) zueinander versetzt angeordnet sind und dass zwischen Öffnung und Auflageroststäben (R3, R31, R4 und R41) ein Gitter (R9) angeordnet ist.

8. Haushaltskleingerät nach einem oder mehreren der Ansprüche 1 bis 9, **dadurch gekennzeichnet, dass** in der Heizkammer (R2) als Heizelement ein federartig geschlitztes und gebogenes Nirosta-Blech vorgesehen ist.

9. Haushaltskleingerät nach Anspruch 1, **dadurch gekennzeichnet, dass** zumindestens auf dem motorisch angetriebenen Auflageroststab (R3 oder R4) ein Zahnrad (R11) angeordnet ist, welches in die Raster-Öffnungen der Drahtröhre (R10) eingreift.

10. Toaster mit Grillrost (1) und einem Gehäuse (2) mit mindestens einem kopfseitigen Einsteckschlitz (3) für Brotscheiben, wobei der Grillrost (1) nur einseitig an einem Stellfinger (5) gelagert und aus einer Ruhelage (I) in eine Arbeitslage (II) mittels einer mit dem Stellfinger (5) verbundenen Handhabe (6) höhenverstellbar ist, **dadurch gekennzeichnet, dass** entweder der Stellfinger (5) oder die Handhabe (6) als Teil einer kombinierten Hubbegrenzungs- und Rasteinrichtung ausgestaltet und am Anschlag der Arbeitslage (II) verrastbar ist und welcher eine Rollwendeeinrichtung (R3, R4; R10, R11) trägt.

## Claims

1. An electro-heating household device, in particular a toaster, having a housing (R1) with at least one heating chamber (R2) open to the top, having an attachment in the form of an oblong wire cage affixed to a pivot and having an actuator for the pivot passing through the axis of said wire cage, which during the toasting process rests on a bearing at a certain distance above the bread inlet slot, while the wire cage may be opened for introduction of the material to be toasted and, respectively, closed; **characterized in that**:
said wire cage and pivot passing through its axis are replaced by an attachment in the form of a roller-based turning device (R3, R4, R10, R11) consisting of a wire tube open from both sides (R10) and at least two supporting grill bars (R3, R4) located at a certain distance from each other, in parallel to the bread inlet slot and resting on roller bearings;
wherein said wire tube (R10) rests on said supporting grill bars (R3, R4); and wherein at least one of said supporting grill bars (R3, R4) is driven by a winding spring actuator or by a motor (R7).

2. The small household device according to claim 1, wherein at least the roller-bearing-rested and driving grill bar (R3, R4) is corrugated or coated with material of high friction resistance.

3. The small household device according to claim 1, wherein the supporting arrangement of at least one of said supporting grill bars (R3, R4) is displaceable in respect of the distance between the bars.

4. The small household device according to claim 1, wherein the roller-based turning device is carried out as toaster attachment (R5), wherein said supporting grill bars (R3, R4) may be vertically displaced within said attachment (R5) and wherein said attachment (R5) and the toaster are provided with a device (R6), which fastens them in operative position.

5. The small household device according to claim 1 or claim 4, wherein in said housing (R1) or said attachment (R5) there is an winding spring actuator or electric motor (R7), wherein said winding spring actuator, or said electric motor (R7), or the transmission (R8) are engaged with the supporting grill bar (R3) or the supporting grill bars (R3, R4).

6. The small household device according to claim 5, wherein in said attachment (R5) there is a battery to serve as a power source of said electric motor (R7), or an inductively, capacitively or optically charged accumulator or; wherein said electric motor is powered by an isolating transformer and an contactor located on the upper side of the toaster.

7. The small household device according to one or more of claims 1 to 6, wherein the supporting grill bars (R3, R31, R4 and R41) are displaced versus each other and wherein the grid (R9) is located between the opening and said supporting grill bars (R3, R31, R4 and R41).

8. The small household device according to one or more of claims 1 to 7, wherein the heating component of said heating chamber (R2) is provided in the form of a spring-slotted and curved stainless steel plate.

9. The small household device according to claim 1, wherein a gear wheel (R11) is situated at least on the motor-driven grill bar (R3 or R4), said gear wheel is engageable with the openings of the wire tube (R10) defining a grid.

10. A toaster with grill (1) and housing (2) having at least one slice inlet slot (3) on the front side, where the grill (1) is bearing-rested unilaterally on the regulating finger (5) and may be displaced vertically from idle position (I) to working position (II) by a lever (6) coupled to said regulating finger (5), **characterized in that**:
said regulating finger (5) or said lever (6) is carried out as part of a combined stroke-limitation and latching device, and may be snapped to the stop of the working position (II) and carrying the roller-based turning device (R3, R4, R10, R11).

## Revendications

1. Appareil electronique miniaturise et chauffés électriquement, en particulier un grille-pain, comportant : un boîtier (R1), au moins une chambre de chauffage (R2) ouverte sur le coté supérieur, un dispositif sous la forme d'une cage oblongue en fil de fer fixée sur un support, et un mouvement du support à travers l'axe de la cage en fil, ce dernier se trouve au-dessus du réceptacle du pain durant le procès de cuisson, ce faisant la cage en fil peut s'ouvrir pour y faire entrer l'objet à cuire, et se fermer respectivement, **caractérisé en ce qu'**au lieu d'utiliser une cage en fil et le support qui la traverse, l'on a prévu en tant que dispositif un appareil à rouleau pivotant (R3, R4, R10, R11) qui est composé d'un panier en fil (R10) ouvert sur les deux cotés et d'au moins deux barres de grille (R3, R4) de support, dont l'une au moins de ces deux barres de grille (R3, R4) est mue par un ressort ou par un moteur (R7).

2. Appareil electronique miniaturise selon la revendication 1, dans lequel au moins une des barres de grille à roulement (R3, R4) est moletée, ou bien est couverte de matières à haute résistance au frottement.

3. Appareil electronique miniaturise selon la revendication 1, dans lequel au moins une des deux barres parallèles de support de la grille (R3, R4) est logé de façon mobile par rapport à l'équidistance entre les deux barres.

4. Appareil electronique miniaturise selon la revendication 1, dans lequel le culbuteur à rouleau est confectionné pour servir de dispositif (R5) de toaster, que les barres de grille servant de support peuvent se mouvoir en direction verticale dans le dispositif (R5) et que le dispositif (R5) et le toaster possèdent un équipement (R6) qui les relie entre eux en état de fonctionnement.

5. Appareil electronique miniaturise selon la revendication 1 ou 4, dans lequel le boîtier (R1) ou le dispositif (R5) prévoit une motion par ressort remontant ou par moteur électrique (R7) et que le ressort ou bien le moteur électrique (R7) ou bien la transmission (R8) sont engrenés à la barre de support de la grille (R3) ou bien les deux barres (R3, R4) de support de la grille de cuisson.

6. Appareil electronique miniaturise selon la revendication 5, dans lequel le dispositif (R5) prévoit une pile pour l'alimentation du moteur électrique, ou bien un accumulateur accumulatif, inductif ou d'alimentation optique, ou bien l'alimentation électrique s'effectue à travers un transformateur de séparation et un équipement de contact, disposé sur la partie supérieure du grille-pain.

7. Appareil electronique miniaturise selon l'une quelconque ou plusieurs des revendications 1 à 6, dans lequel les barres de grille de support (R3, R31, R4 et R41) sont transposées l'une envers l'autre et qu'une grille (R9) est disposée entre l'ouverture et les barres de grille de support (R 3, R31, R4 et R41).

8. Appareil electronique miniaturise selon l'une quelconque ou plusieurs des revendications 1 à 7, dans lequel la chambre de chauffage (R2) comprend, en qualité d'élément de chauffage, une feuille inox courbée, cannelée comme un ressort.

9. Appareil electronique miniaturise selon la revendication 1, dans lequel une roue dentée (R11) est installée au moins sur la barre de support de grille mue par moteur (R3 ou R4), laquelle roue dentée s'engrène dans les ouvertures en treillis du panier en fil (R10).

10. Grille-pain avec un grille (1) et un boîtier (2) avec au moins une cannelure de réception pour les tranches de pain (3) sur le coté face, dont la grille (1) se meut unilatéralement sur le tourillon de réglage (5) et peut se déplacer sur la verticale depuis l'état de repos (I) dans l'état de fonction (II) à travers la poignée (6) reliée a tourillon de réglage (5), **caractérisé en ce que** le tourillon de réglage (5) (ou respectivement la poignée (6)) est confectionné comme une part composante de dispositif de fixation de la marche et peut être fixé sur le fixateur d'état de fonction (II) et supporter le culbuteur à rouleau (R3, R4, R10, R11).
